# EUROPÄISCHE PATENTSCHRIFT

(11) **EP 0 728 839 B1**
(45) Veröffentlichungstag und Bekanntmachung des Hinweises auf die Patenterteilung: **05.11.2003**
(21) Anmeldenummer: 95119696.3
(22) Anmeldetag: 14.12.1995
(51) Int. Cl.: C12C 7/06

(54) **Rührwerk-Rührflügelanordnung sowie Rührwerk für ein Maischgefäss**
Rotating agitator assembly and agitator for mashing apparatus
Ensemble d'agitateur rotatif et agitateur pour cuve de brassage

(30) Priorität: 21.02.1995 DE 19505808
(43) Veröffentlichungstag der Anmeldung: 28.08.1996
(73) Patentinhaber: Hrch. Huppmann GmbH, 97318 Kitzingen (DE)
(72) Erfinder: Lenz, Bernhard, 97318 Kitzingen (DE); Lenz, August, 97318 Kitzingen (DE)
(74) Vertreter: Böck, Bernhard, Dipl.-Ing.

(56) Entgegenhaltungen:
- EP-A- 0 266 732
- DE-C- 192 515
- DE-U- 29 517 343
- US-A- 4 083 653
- US-A- 4 125 065
- US-A- 5 073 033

## Beschreibung

Die vorliegende Erfindung betrifft eine Rührflügelanordnung in einem Maischgefäß, wobei die Rührflügelanordnung im Bodenbereich des Maischgefäßes über einen Drehantrieb antreibbar ist und mindestens zwei Rührflügel aufweist. Des weiteren betrifft die Erfindung ein Rührwerk in einem Maischbottich oder dergleichen mit einer im Bodenbereich des Maischbottichs anordnenbaren, über einen Drehantrieb antreibbaren Rührflügelanordnung.

Bei den verschiedenen Maischverfahren werden beheizbare Maischgefäße, etwa ein Maischbottich oder eine Maischbottichpfanne, zur Aufnahme, Temperierung und Durchmischung der Maische verwendet. Ein Rührwerk mit einer im Bodenbereich des Maischgefäßes angeordneten Rührflügelanordnung dient insbesondere dazu, eine gleichmäßige Temperaturverteilung in der über den Boden des Maischgefäßes beheizten Maische zu erzielen. Darüber hinaus dient das Durchmischen der Maische dazu, eine möglichst große Homogenität der Maische zu erreichen.

Aus der DE 295 17 343 U1 und der DE 192 515 C sind gattungsgemäße Rührflügelanordnungen mit winkelig angestellten Rührflügeln bekannt.

In der Praxis hat sich herausgestellt, daß im Betrieb von Rührwerken bestimmte Umfangsgeschwindigkeiten der Rührflügelanordnung nicht überschritten werden sollten, um keine nachteilige Strukturveränderung von Maischeteilchen durch die durch den Rührvorgang bewirkte Scherbeanspruchung zu bewirken. Die Erfahrung zeigt, daß ein Grenzwert von ca. 3 m/s für die Umfangsgeschwindigkeit der Rührflügelanordnung nicht überschritten werden sollte.

Der vorliegenden Erfindung liegt daher die Aufgabe zugrunde, ein Rührwerk bzw. eine Rührflügelanordnung zu schaffen, das bzw. die ohne Erhöhung der Umfangsgeschwindigkeit eine verbesserte Durchmischung der Maische ermöglicht.

Diese Aufgabe wird durch eine Rührflügelanordnung mit den Merkmalen des Anspruchs 1 gelöst.

Der Erfindung liegt der Gedanke zugrunde, daß der Grad, der beim Rührwerksbetrieb erreichbaren Durchmischung der Maische im wesentlichen von der mit den Rührflügeln erreichbaren Durchwirbelung der Maische abhängig ist. Diese Durchwirbelung hängt u. a. von der Umfangsgeschwindigkeit der Rührflügel, der Profilierung der Rührflügel und der Förderfläche der Rührflügel, also von der in eine Ebene senkrecht zur Drehebene der Rührflügelanordnung projizierten Oberfläche der Rührflügel, ab. Bei Versuchen hat sich herausgestellt, daß es bei gleichbleibender Umfangsgeschwindigkeit der Rührflügel möglich ist, eine erhöhte Verwirbelung zu erreichen, indem die Rührflügel mit Strömungsdurchtrittsöffnungen versehen werden. Hierdurch wird es einerseits möglich, auch in Oberflächenbereichen der Rührflügel, die von der Flügelvorderkante und der Flügelhinterkante entfernt sind, größere Wirbelzonen auszubilden. Auf der anderen Seite verringert sich durch die Anbringung der Strömungsdurchtrittsöffnungen die Widerstandsfläche der Rührflügel, so daß bei gleicher Drehzahl der Rührflügelanordnung die Leistungsaufnahme eines für das Rührwerk verwendeten elektrischen Drehantriebs reduziert wird. Im Umkehrschluß ergibt sich hieraus, daß es möglich ist, den Grad der Verwirbelung bei Rührflügeln, die mit Strömungsdurchtrittsöffnungen versehen sind, zu erhöhen, ohne daß damit eine erhöhte Leistungsaufnahme des Drehantriebs im Vergleich zu einer herkömmlichen Rührflügelanordnung verbunden wäre.

Aus dem Vorstehenden wird deutlich, daß sich durch die erfindungsgemäße Ausbildung der Rührflügelanordnung bei gegebener Obergrenze für die zulässige Umfangsgeschwindigkeit der Rührflügelanordnung im wesentlichen zwei Vorteile ergeben. Im Vergleich zu einer konventionellen Rührflügelanordnung ist es zum einen möglich, die Leistungsaufnahme des Rührwerkdrehantriebs zu reduzieren und damit das Maischeverfahren kosteneffektiver zu gestalten; zum anderen ist es möglich, den Grad der Verwirbelung in der Maische zu erhöhen, ohne daß damit eine höhere Umfangsgeschwindigkeit verbunden wäre.

Gemäß einer bevorzugten Ausführungsform der Rührflügelanordnung wird die in eine Ebene senkrecht zur Drehebene projizierte Höhe der Rührflügel zumindest bereichsweise zur Nabe hin größer. Hierdurch wird erreicht, daß die sich zur Nabe hin verringernde Umfangsgeschwindigkeit der Rührflügelanordnung durch eine entsprechend größer werdende Förderfläche kompensiert wird, so daß eine über die Längsachse der Rührflügelanordnung im wesentlichen konstante Verwirbelung erreicht wird.

Die Rührflügel in der Rührflügelanordnung nach Anspruch 1 weisen jeweils mindestens zwei Rührflügelsegmente auf, die mit unterschiedlichen Anstellwinkeln zur Drehebene angeordnet sind, um eine zum Boden des Maischgefäßes gerichtete Abwärtsströmung und eine vom Boden weggerichtete Aufwärtsströmung zu bewirken. Hierdurch wird eine besonders gleichmäßige Temperaturverteilung in der über den Boden des Maischgefäßes beheizten Maische erreicht.

Wenn die Anstellwinkel der Rührflügelsegmente veränderbar sind, ist es möglich, den Grad der Durchmischung der jeweiligen Verfahrensphase beim Maischen anzupassen. Beispielsweise können zum Anfahren des Rührwerks die Rührblätter möglichst flach und in einer stationären Durchmischungsphase möglichst steil angestellt sein. Ein flacherer Anstellwinkel ist auch bei geringen Maischemengen vorteilhaft, um eine zu starke Trombenbildung verbunden mit dem Einschlagen von zu großen Luftmengen in die Maische zu verhindern.

Vorteilhaft ist es auch, wenn die Rührflügelsegmente hinsichtlich ihrer Förderflächen so bemessen sind, daß im wesentlichen ein Strömungsgleichgewicht zwischen Abwärtsströmung und Aufwärtsströmung herrscht, um hierdurch eine besonders gleichmäßige Durchmischung und Temperaturverteilung in der Maische zu erzielen.

Wenn ein Rührwerk zur Herstellung und Durchmischung von Maische in einem Maischgefäß mit der im Bodenbereich des Maischgefäßes anordnenbaren, über einen Drehantrieb antreibbaren erfindungsgemäßen Rührflügelanordnung versehen ist, lassen sich in vorteilhafter Weise Betriebseinstellungen des Rührwerks mit den vorstehend geschilderten vorteilhaften Eigenschaften der Rührflügelanordnung kombinieren, um eine noch weiter verbesserte Durchmischung der Maische zu ermöglichen.

Wenn ein derartiges Rührwerk eine Hubverstellung aufweist, derart, daß der Abstand der Rührflügelanordnung zum Boden des Maischgefäßes veränderbar ist, kann die Höheneinstellung der Rührflügelanordnung relativ zum Boden des Maischgefäßes der jeweiligen Verfahrensphase angepaßt werden. So kann die Rührflügelanordnung während der Aufheizphase der Maische in ihre tiefste Position, also unmittelbar über dem Boden des Maischgefäßes betrieben werden. Somit wird sichergestellt, daß es in dieser Phase nicht zu Anbackungen an dem als Heizfläche dienenden Boden kommt. Während des weiteren Verfahrens kann der Abstand der Rührflügelanordnung über dem Boden den einzelnen als "Maischerasten" bezeichneten Temperaturstufen angepaßt werden, um für die jeweils günstigste Durchmischung der Maische zu sorgen.

Weiterhin erweist es sich als vorteilhaft, wenn das Rührwerk mit einer Drehzahlverstellung versehen ist, derart, daß die Drehzahl der Rührflügelanordnung in Abhängigkeit von Zustandsgrößen der Maische veränderbar ist.

Wenn das Rührwerk mit einer Anstellwinkelverstellung versehen ist, derart, daß die Anstellwinkel der Rührflügelsegmente veränderbar sind, ist es möglich, wie bereits erwähnt, die Anstellwinkel in Abhängigkeit von der jeweiligen Verfahrensphase zu ändern. Darüber hinaus ergibt sich bei Bedarf auch die Möglichkeit, das Rührwerk mit konstanter Drehzahl zu betreiben und den Grad der Durchmischung lediglich über eine entsprechende Änderung der Anstellwinkel einzustellen.

Je nach Zusammensetzung und Menge der Maische kann es sich auch als vorteilhaft erweisen, die Hubverstellung, die Drehzahlverstellung und die Anstellwinkelverstellung des Rührwerks kombiniert zur Erzielung eines optimalen Ergebnisses des Maischverfahrens einzusetzen.

Eine besonders vorteilhafte, insbesondere wirtschaftliche Möglichkeit des Rührwerkbetriebs ergibt sich, wenn die Hubverstellung und/oder die Drehzahlverstellung und/oder die Anstellwinkelverstellung in Abhängigkeit von der Stromaufnahme des Drehantriebsmotors erfolgt.

Nachfolgend wird ein Ausführungsbeispiel der erfindungsgemäßen Rührflügelanordnung anhand der Zeichnung näher beschrieben. Es zeigen:
- **Fig. 1**: eine schematische Darstellung eines Rührwerks mit einer Rührflügelanordnung;
- **Fig. 2**: eine Schnittansicht der in **Fig. 1** dargestellten Rührflügelanordnung gemäß dem Schnittlinienverlauf II - II.

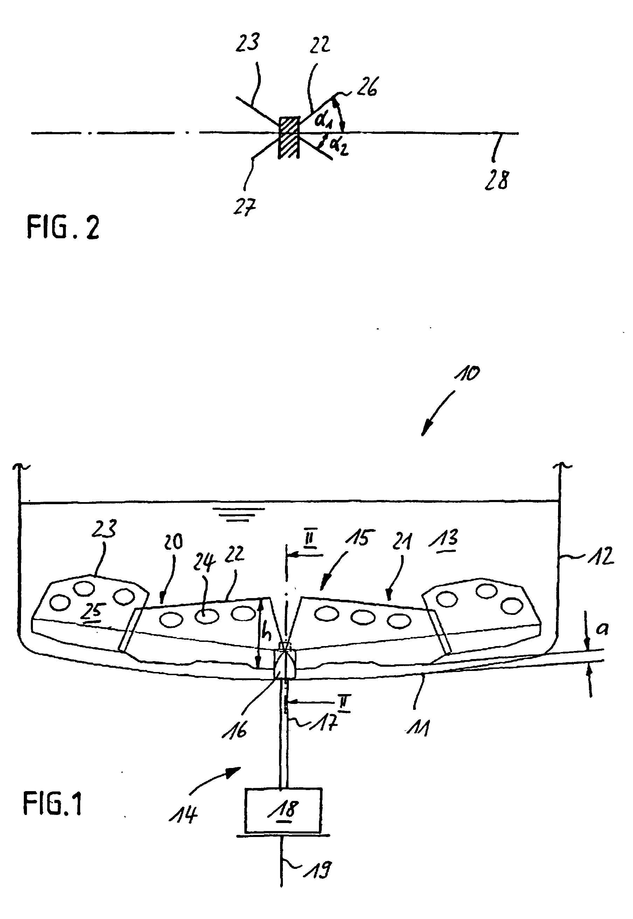

In **Fig. 1** ist schematisch der untere Teil einer Maischbottichpfanne 10 mit einem Boden 11 und einer Bottichwand 12 dargestellt. Zur Durchmischung einer in der Maischbottichpfanne 10 aufgenommenen Maische 13 dient ein Rührwerk 14 mit einer oberhalb des Bodens 11 angeordneten Rührflügelanordnung 15.

Die Rührflügelanordnung 15 wird über eine mit einer Nabe 16 der Rührflügelanordnung 15 verbundene, durch den Boden 11 der Maischbottichpfanne 10 hindurchgeführte Antriebswelle 17 von einem Elektromotor 18 angetrieben. Der Elektromotor 18 befindet sich auf einer Hubeinrichtung 19, die ein Anheben und Senken des Elektromotors 18 und somit eine Veränderung eines Abstandes a der Rührflügelanordnung 15 zum Boden 11 ermöglicht.

Die Rührflügelanordnung 15 weist bei dem hier dargestellten Ausführungsbeispiel zwei diametral einander gegenüberliegend an der Nabe 16 angebrachte Rührflügel 20, 21 mit jeweils zwei Rührflügelsegmenten 22, 23 auf.

Wie **Fig. 2** deutlich zeigt, weisen die Rührflügelsegmente 22, 23 unterschiedliche Anstellwinkel α₁ und α₂ zu einer Drehebene 28 auf, so daß bei einer Drehbewegung der Rührflügelanordnung 15 im Uhrzeigersinn (bei Draufsicht auf die Rührflügelanordnung) durch die zur Nabe 16 hin angeordneten, inneren Rührflügelsegmente 22 eine zum Boden 11 gerichtete Abwärtsströmung und durch die äußeren Rührflügelsegmente 23 eine vom Boden 11 weggerichtete Aufwärtsströmung in der Maische 13 induziert wird.

Wie **Fig. 1** darüber hinaus zeigt, sind die Rührflügelsegmente 22, 23 mit Strömungsdurchtrittsöffnungen 24 in ihrer Oberfläche 25 versehen. Diese Strömungsdurchtrittsöffnungen 24 sorgen dafür, daß sich auch entfernt von einer Flügelvorderkante 26 und einer Flügelhinterkante 27 stärkere Verwirbelungen bei einer Drehbewegung der Rührflügelanordnung 15 ausbilden. Um die Beanspruchung der Maischeteilchen möglichst gering zu halten, sind die Flügelkanten abgerundet. Die Strömungsdurchtrittsöffnungen 24 sind bei dem in **Fig. 1** dargestellten Ausführungsbeispiel mit geschlossener Kontur, innerhalb der Oberfläche 25 der Rührflügelsegmente 22, 23 angeordnet und kreisrund ausgebildet. Es sind aber auch hiervon völlig abweichende Ausführungen denkbar, bei denen beispielsweise die Strömungsdurchtrittsöffnungen in die Flügelvorderkante 26 bzw. die Flügelhinterkante 27 übergehend ausgebildet sein können. Darüber hinaus sind auch beliebige geometrische Formen, etwa auch Schlitze, möglich.

Wie **Fig. 1** weiterhin zeigt, weisen bei dem hier dargestellten Ausführungsbeispiel die innenliegenden Rührflügelsegmente 22 eine zur Nabe 16 hin ansteigende Höhe h auf, wobei dies die Höhe der in eine Ebene senkrecht zur Drehebene 24 projizierten Oberfläche 25 der Rührflügelsegmente 22, 23 ist. Diese projizierte Oberfläche entspricht der Förderfläche der Rührflügelsegmente.

Weiterhin zeigt **Fig. 1,** daß die Rührflügelsegmente 22, 23 unterschiedlich bemessene Förderflächen aufweisen, um zu erreichen, daß die dem Produkt aus Umfangsgeschwindigkeit und Förderfläche proportionale Förderleistung der inneren und äußeren Rührflügelsegmente 22, 23 im wesentlichen gleich ist, so daß im Bereich der inneren Rührflügelsegmente 22 eine Abwärtsströmung erzeugt wird, die hinsichtlich des Volumenstroms mit der im Bereich der äußeren Rührflügelsegmente 23 erzeugten Aufwärtsströmung übereinstimmt.

Um die Anstellwinkel α₁ und α₂ der Rührflügelsegmente 22, 23 auch während des Betriebs des Rührwerks 14 verändern zu können, ist eine hier nicht näher dargestellte Anstellwinkelverstelleinrichtung vorgesehen, die beispielsweise über Verstellwellen, die durch eine als Hohlwelle ausgeführte Antriebswelle 17 in die Nabe 16 geführt sind, eine Drehverstellung der auf koaxialen Rührflügelwellen angeordneten Rührflügelsegmente 22, 23 ermöglicht.

## Patentansprüche

1. Rührflügelanordnung in einem Maischgefäß, wobei die Rührflügelanordnung im Bodenbereich des Maischgefäßes über einen Drehantrieb antreibbar ist und mindestens zwei Rührflügel aufweist, wobei
die Rührflügel (20, 21) jeweils mindestens zwei Rührflügelsegmente (22, 23) aufweisen, die mit unterschiedlichen Anstellwinkeln (α₁, α₂) zur Drehebene (28) angeordnet sind, um eine zum Boden (11) des Maischgefäßes (10) gerichtete Abwärtsströmung und eine vom Boden (11) weggerichtete Aufwärtsströmung zu bewirken
**dadurch gekennzeichnet,**
**daß** die Rührflügel (20, 21) mit Strömungsdurchtrittsöffnungen (24) versehen sind.

2. Rührflügelanordnung nach Anspruch 1,
**dadurch gekennzeichnet,**
**daß** die in eine Ebene senkrecht zu einer Drehebene (28) projizierte Höhe h der Rührflügel (20, 21) zumindest bereichsweise zur Drehachse der Rührflügelanordnung (15) ansteigt.

3. Rührflügelanordnung nach Anspruch 1,
**dadurch gekennzeichnet,**
**daß** die Anstellwinkel (α₁, α₂) der Rührflügelsegmente (22, 23) veränderbar sind.

4. Rührflügelanordnung nach Anspruch 1 oder 3,
**dadurch gekennzeichnet,**
**daß** die Rührflügelsegmente (22, 23) hinsichtlich ihrer Förderflächen so bemessen sind, daß im wesentlichen ein Strömungsgleichgewicht zwischen Abwärtsströmung und Aufwärtsströmung herrscht.

5. Rührwerk in einem Maischgefäß mit einer im Bodenbereich des Maischgefäßes anordnenbaren, über einen Drehantrieb antreibbaren Rührflügelanordnung nach einem oder mehreren der Ansprüche 1 bis 4.

6. Rührwerk nach Anspruch 5,
**dadurch gekennzeichnet,**
**daß** das Rührwerk (14) mit einer Hubverstellung (19) versehen ist, derart, daß der Abstand a der Rührflügelanordnung (15) zum Boden (11) des Maischgefäßes (10) veränderbar ist.

7. Rührwerk nach Anspruch 5 oder 6,
**dadurch gekennzeichnet,**
**daß** das Rührwerk (14) mit einer Drehzahlverstellung versehen ist, derart, daß die Drehzahl der Rührflügelanordnung (15) in Abhängigkeit von Zustandsgrößen der Maische (13) veränderbar ist.

8. Rührwerk nach einem oder mehreren der Ansprüche 5 bis 7,
**dadurch gekennzeichnet,**
**daß** das Rührwerk (14) mit einer Anstellwinkelverstellung versehen ist, derart, daß die Anstellwinkel (α₁, α₂) der Rührflügelsegemente (22, 23) veränderbar sind.

9. Rührwerk nach einem oder mehreren der Ansprüche 5 bis 8,
**dadurch gekennzeichnet,**
**daß** die Hubverstellung (19) und/oder die Drehzahlverstellung und/oder die Anstellwinkelverstellung in Abhängigkeit von der Stromaufnahme eines Drehantriebsmotors (18) erfolgt.

## Claims

1. An agitator vane assembly in a mashing apparatus, in which the agitator vane assembly in the base area of the mashing apparatus can be driven via a rotary drive and has at least two agitator vanes, in which the agitator vanes (20, 21) each have at least two agitator vane segments (22, 23) which are arranged at different angles of attack (α₁, α₂) to the plane of rotation (28) in order to cause a downward flow directed towards the base (11) of the mashing apparatus (10) and an upward flow directed away from the base (11), **characterised in that** the agitator vanes (20, 21) are provided with flow passage openings (24).

2. An agitator vane assembly according to claim 1, **characterised in that** the height h of the agitator vanes (20, 21) projected in a plane perpendicular to a plane of rotation (28) extends at least in areas to the rotational axis of the agitator vane assembly (15).

3. An agitator vane assembly according to claim 1, **characterised in that** the angles of attack (α₁, α₂) of the agitator vane segments (22, 23) can be changed.

4. An agitator vane assembly according to claim 1 or 3, **characterised in that** the agitator vane segments (22, 23) are dimensioned with respect to their transport surfaces so that essentially a flow equilibrium prevails between the downward flow and the upward flow.

5. An agitator in a mashing apparatus with an agitator vane assembly according to one or more of claims 1 to 4 which can be arranged in the base area of the mashing apparatus and can be driven via a rotary drive.

6. An agitator according to claim 5, **characterised in that** the agitator (14) is fitted with a lift adjustment (19) such that the distance a of the agitator vane assembly (15) to the base (11) of the mashing apparatus (10) can be changed.

7. An agitator according to claim 5 or 6, **characterised in that** the agitator (14) is fitted with a rotation speed adjustment such that the rotation speed of the agitator vane assembly (15) can be changed according to the sizes present in the mash (13).

8. An agitator according to one or more of claims 5 to 7, **characterised in that** the agitator (14) is fitted with an angle of attack adjustment such that the angles of attack (α₁, α₂) of the agitator vane segments (22, 23) can be changed.

9. An agitator device according to one or more of claims 5 to 8, **characterised in that** the lift adjustment (19) and/or the rotation speed adjustment and/or the angle of attack adjustment are followed according to the power consumption of a rotary drive motor (18).

## Revendications

1. Agencement à palettes d'agitation dans une cuve-matière, l'agencement à palettes pouvant être entraîné dans la zone du fond de la cuve-matière par une commande rotative et présentant au moins deux palettes, les palettes (20, 21) présentant chacune au moins deux segments de palette (22, 23) qui sont disposés avec des angles d'attaque différents (α₁, α₂) par rapport au plan de rotation (28), de manière à créer un écoulement descendant dirigé vers le fond (11) de la cuve-matière (10) et un écoulement ascendant s'éloignant du fond (11),
**caractérisé en ce que**
les palettes (20, 21) sont dotées d'ouvertures de passage d'écoulement (24).

2. Agencement à palettes d'agitation selon la revendication 1,
**caractérisé en ce que**
la hauteur h des palettes (20, 21) projetée dans un plan vertical par rapport à un plan de rotation (28) augmente au moins sectoriellement par rapport à l'axe de rotation de l'agencement à palettes d'agitation (15).

3. Agencement à palettes d'agitation selon la revendication 1,
**caractérisé en ce que**
les angles d'attaque (α₁, α₂) des segments de palette (22, 23) sont modifiables.

4. Agencement à palettes d'agitation selon la revendication 1 ou 3,
**caractérisé en ce que**
les segments de palette (22, 23) doivent être dimensionnés par rapport à leurs surfaces d'extraction, de manière à ce qu'un équilibre d'écoulement règne essentiellement entre l'écoulement descendant et l'écoulement ascendant.

5. Agitateur dans une cuve-matière avec un agencement à palettes d'agitation qui peut être agencé dans la zone du fond de la cuve-matière et peut être entraîné par une commande rotative selon une ou plusieurs des revendications 1 à 4.

6. Agitateur selon la revendication 5,
**caractérisé en ce que**
l'agitateur (14) est doté d'un réglage de la hauteur (19), de manière à ce que la distance a de l'agencement à palettes d'agitation (15) par rapport au fond (11) de la cuve-matière (10) puisse être modifiée.

7. Agitateur selon la revendication 5 ou 6
**caractérisé en ce que**
l'agitateur est doté d'un réglage de la vitesse de rotation tel que la vitesse de rotation de l'agencement à palettes d'agitation (15) puisse être modifiée en fonction de paramètres d'état de la trempe. (13).

8. Agitateur selon une ou plusieurs des revendications 5 à 7,
**caractérisé en ce que**
l'agitateur (14) est doté d'un réglage des angles d'attaque tel que les angles d'attaque (α₁, α₂) des segments de palettes (22, 23) puissent être modifiés.

9. Agitateur selon une ou plusieurs des revendications 5 à 8,
**caractérisé en ce que**
le réglage de la hauteur (19) et/ou le réglage de la vitesse de rotation et/ou le réglage des angles d'attaque s'effectue(nt) en fonction de la captation de courant d'un moteur rotatif (18).
